Europäisches Patentamt

European Patent Office

Office européen des brevets

(11) Veröffentlichungsnummer: **0 504 547 A2**

# EUROPÄISCHE PATENTANMELDUNG

(21) Anmeldenummer: **92100710.0**

(22) Anmeldetag: **17.01.92**

(51) Int. Cl.5: **G05D 23/19**

(30) Priorität: **23.01.91 DE 9100757 U**

(43) Veröffentlichungstag der Anmeldung:
**23.09.92 Patentblatt 92/39**

(84) Benannte Vertragsstaaten:
**AT BE CH DE DK ES FR GB GR IT LI LU MC NL PT SE**

(71) Anmelder: **SCHEURICH STEUERUNGSBAU ELEKTRONIK + Co KG**
**Eltzstrasse 27**
**W-5500 Trier(DE)**

(72) Erfinder: **Lauer, Karl-Heinz A. I.-Ing.(FH)**
**Hillingstrasse 43**
**W-5500 Trier(DE)**
Erfinder: **Guthörl, Horst**
**Karolingerstrasse 41**
**W-5500 Trier(DE)**

(74) Vertreter: **Schönherr, Wolfgang et al**
**Patentanwälte Wolfgang Schönherr Dipl.-Ing.**
**Karl-Heinz Serwe Hawstrasse 28**
**W-5500 Trier(DE)**

(54) In einem Kasten angeordnete Steuer- und Schaltvorrichtung für kälte- und/oder klimatechnische Anlagen.

(57) Bei einer in einem Kasten angeordneten Steuer- und Schaltvorrichtung für kälte- und/oder klimatechnische Anlagen, die aus einem Kraftstromanschluß, einem Hauptschalter, einer Hauptsicherung, einer Steuerstromsicherung und einem Luftschütz für Verdichter als Grundausstattung sowie einer Steckanschlüsse aufweisenden Platine besteht, ist die Grundausstattung wahlweise mit einem Überstromrelais, einer Abtauuhr, einem Heizungsschütz, einem Verdampferlüfterschütz und einem Verflüssigerlüfterschütz aufrüstbar und durch einfache Stecktechnik mit der Platine verbunden.

Zu der Grundausstattung sind Signallampen für den Betrieb des Kompressors und der Abtauheizung sowie für Störungen das Kompressors nachrüstbar.

Vorteilhaft sind zu der Grundausstattung Steuer- und Überwachungsthermostate nachrüstbar.

Fig. 1

Die Erfindung betrifft eine in einem Kasten angeordnete Steuer und Schaltvorrichtung für kälte- und/oder klimatechnische Anlagen, bestehend aus einem Kraftstromanschluß, einem Hauptschalter, einer Hauptsicherung, einer Steuerstromsicherung und einem Luftschütz für Verdichter als Grundausstattung sowie einer Steckanschlüsse aufweisenden Platine.

Es sind Steuer- und Schaltvorrichtungen bekannt, die in einem Kasten angeordnet sind und für jeden speziellen Anwendungsfall eine besonders gefertigte Seriensteuerung aufweisen. Diese Steuer- und Schaltvorrichtungen haben den Nachteil, daß sie in großer Typenvielfalt hergestellt und vorrätig gehalten werden müssen.

Es ist auch ein Steuer- und Schaltkasten zur Steuerung einer kälte- oder klimatechnischen Anlage mit Platine bekannt, bei der die Platine je eine Steckleiste für den zu schaltenden Anlagentyp sowie für die Betriebsart aufweist, wobei die gewünschte Steuerungsart durch Einstecken von Kodierkarten in die entsprechende Steckleiste bestimmt wird. Die Verwendung eines Kodiersteckers in Form einer Steckkarte hat sich jedoch als nachteilig gezeigt.

Aufgabe der Erfindung ist es eine Steuer- und Schaltvorrichtung der genannten Art derart auszubilden, daß ohne besondere Kodiersteckkarten gearbeitet werden kann.

Zur Lösung dieser Aufgabe ist die Vorrichtung dadurch gekennzeichnet, daß die Grundausstattung wahlweise mit einem überstromrelais, einer Abtauuhr, einem Heizungsschütz, einem Verdampferlüfterschütz und einem Verflüssigerlüfterschütz aufrüstbar und durch einfache Stecktechnik mit der Platine verbindbar ist.

Vorteilhaft sind zu der Grundausstattung Signallampen für den Betrieb des Kompressors und der Abtauheizung sowie für Störungen des Kompressors nachrüstbar.

Nach einer weiteren vorteilhaften Ausführungsform sind zu der Grundausstattung Steuer- und Überwachungsthermostate nachrüstbar.

Die Erfindung ist in den Zeichnungen beispielhaft dargestellt.
Es zeigen:

Fig. 1    den Aufbau eines Schaltkastens nach der Erfindung

Fig. 2    die Steckeranordnung auf der Platine des Schaltkastens nach Fig. 1.

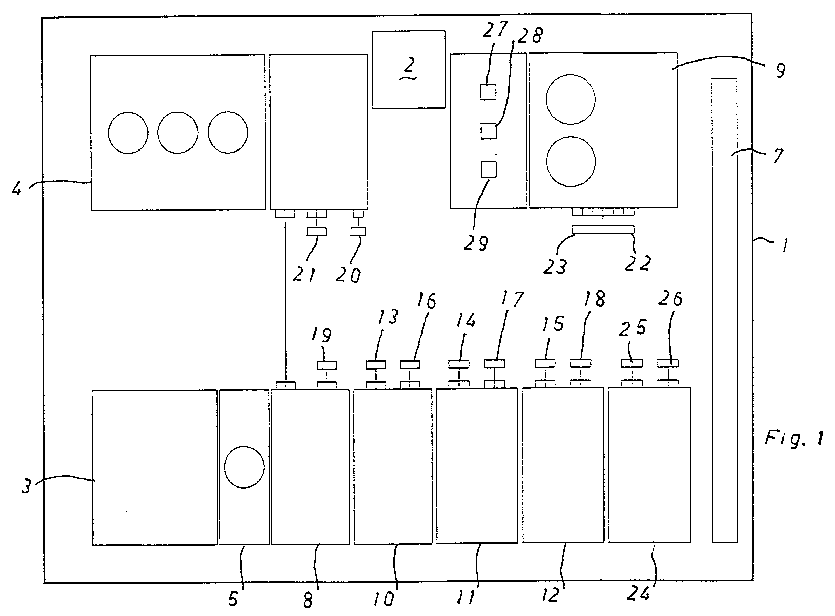

Nach Fig. 1 sind in einem Schaltkasten 1 mit abnehmbarem Deckel ein Verbindungsstecker 2 für Kraftstrom, ein Hauptschalter 3, eine Hauptsicherung 4 und eine Steuerstromsicherung 5 angeordnet. Zu der Grundausstattung gehören ferner ein Luftschütz für Verdichter 6 sowie eine Steckanschluss aufweisende Platine 7. Diese Grundausstattung ist wahlweise mit einem Überstromrelais 8 einer Abtauuhr 9, einem Heizungsschütz 10, einem Verdampferlüfterschütz 11 und einem Verflüssigerlüfterschütz 12 aufrüstbar.

Durch Steckerverbindungen 13, 14 und 15 sind die Luftschütze 10, 11 bzw. 12 mit dem Verbindungsstecker 2 für Kraftstrom verbindbar. Durch Verbindungsstecker 16, 17 und 18 sind die Luftschütze 10, 11 bzw. 12 mit der Platine 7 verbindbar. Die Platine 7 ist ferner über den Stecker 19 mit dem Überstromrelais 8, über die Stecker 20 und 21 mit dem Luftschütz für Verdichter 6 und über die Stecker 22 und 23 mit der Abtauuhr 9 verbindbar.

Bei einer vorteilhaften Ausführungsform ist wie in Fig. 1 gezeigt, ein Steuer- und überwachungsthermostat 24 zurüstbar, der über den Stecker 25 mit dem Verbindungsstecker 2 für Kraftstrom und den Stecker 26 mit der Platine 7 verbindbar ist.

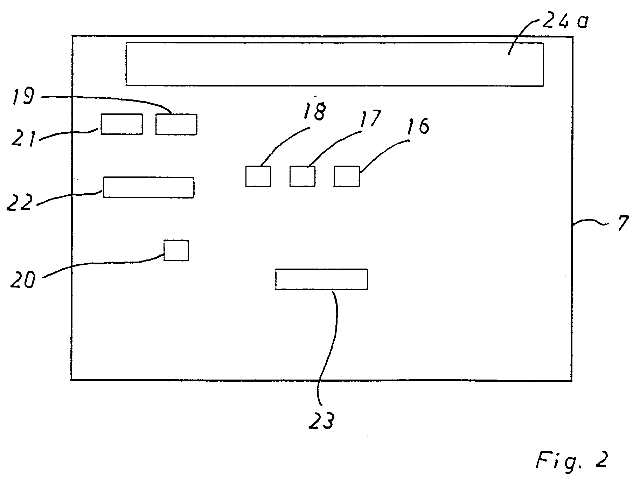

Die entsprechende Steckeranordnung auf der Platine ist in Fig. 2 schematisch dargestellt, wobei die Klemmleiste der Platine mit 27 bezeichnet ist.

Wie Fig. 1 ferner erkennen läßt, sind zu der Grundausstattung Singnallampen nachrüstbar, wobei die Signallampe 27 Störungen des Kompressors, die Signallampe 28 den Betrieb der Abtauheizung und die Signallampe 29 den Betrieb des Kompressors anzeigen.

Bei der Steuer- und Schaltvorrichtung nach der Erfindung sind alle Möglichkeiten für eine Steuerung auf der Platine untergebracht. Der Hauptstrom ist steckbar und der Steuerstrom wird durch das besondere Einstecken in die Platine wahlweise erfoimmt. Der Hauptschalter ist fest verdrahtet.

**Patentansprüche**

1.   In einen Kasten angeordnete Steuer- und Schaltvorrichtung für kälte- und/oder klimatechnische Anlagen, bestehend aus einem Kraftstromanschluß, einem Hauptschalter, einer Hauptsicherung, einer Steuerstromsicherung und einem Luftschütz für Verdichter als Grundausstattung sowie einer Steckanschlüsse aufweisenden Platine, dadurch gekennzeichnet, daß die Grundausstattung wahlweise mit einem überstromrelais (8), einer Abtauuhr (9), einem Heizungsschütz (10), einem Verdampferlüfterschütz (11) und einem Verflüssigerlüfterschütz (12) aufrüstbar und durch einfache Stecktechnik mit der Platine (7) verbindbar ist.

2.   Steuer- und Schaltvorrichtung nach Anspruch 1, dadurch gekennzeichnet, daß zu der Grundausstattung Signallampen (29,28,27) für den Betrieb des Kompressors und der Abtauheizung sowie für Störungen des Kompressors nachrüstbar sind.

3. Steuer- und Schaltvorrichtung nach Anspruch 1, dadurch gekennzeichnet, daß zu der Grundausstattung Steuer- und Überwachungsthermostate (24) nachrüstbar sind.

Fig. 1

EP 0 504 547 A2

Fig. 2